# EUROPEAN PATENT APPLICATION

(11) **EP 3 792 849 A1**
(43) Date of publication of application: **17.03.2021**
(21) Application number: 19196341.2
(22) Date of filing: 10.09.2019
(51) Int. Cl.: G06Q 10/06, G06Q 50/06

(54) **APPARATUS AND METHOD FOR GENERATING EVALUATION DATA OF FACILITIES AND PROJECTS**

(71) Applicant: Hitachi, Ltd., Tokyo 100-8280 (JP)
(72) Inventor: TAMAYO RUIZ, Efrain, London, EC2Y 5AJ (GB); IKEGAYA, Kazuhiro, Tokyo, 100-8280 (JP); BRYDEN, Thomas, London, EC2Y 5AJ (GB)
(74) Representative: MERH-IP Matias Erny Reichl Hoffmann Patentanwälte PartG mbB

(57) **Abstract**

The present subject matter relates to an apparatus, a system, a method and a computer program for generating evaluation data of eco-friendly facilities and related projects. The evaluation data is generated based on measuring data received from green facilities by calculating and aggregating key performance indicators (KPI). The calculation/aggregation of the KPIs is performed on distributed resources using, for example, a cloud-based network and blockchain technology.

## Description

The present subject matter relates to an apparatus, a system, a method and a computer program for generating evaluation data of eco-friendly facilities and related projects.

Climate scientists worldwide agree that the greenhouse gas emissions, which have been rising steadily since the beginning of industrialization, are the main cause of global warming. To meet the Paris Agreement and limit the global mean temperature to within 1.5 to 2 degrees Celsius above the pre-industrial levels by the end of this century, a broad-based transition to a low-carbon economy is required. This includes expensive technological shifts from fossil fuel energy to renewable energies as well as increased energy efficiency of industrial plants and buildings and eco-friendly infrastructure.

There are multiple projects financed using sustainable finance products including green loans, green bonds and sustainability-linked loans.
Also, multiple public and private organisations are doing efforts for the transition to a lower carbon and sustainable society carrying out projects.
For all these activities, a reliable evidence that can be obtained efficiently about the achieved environmental, social or financial performance is needed.

In this context, green bonds are an important measure to promote investments in eco-friendly and sustainable projects in order to achieve the climate targets and avoid further environmental destruction. A green bond is a bond whose proceeds are used to fund green technology projects.

The key types of green technology projects are:
- Green by Nature including, e.g., solar, wind and biomass,
- Contributes to Green including, e.g., buildings, low emission cars, and
- Enabling Green including, e.g., transmission and distribution grids and smart city solutions.

In other words, green technologies comprise, for example, technologies related to renewable energy, energy efficiency, clean transportation, sustainable water management, pollution prevention, climate change adaptation, conservation of biodiversity, resource conservation and recycling, eco-friendly products and production and sustainable management of living natural resources. To ensure the proper function of the installed technologies, to provide evidence of the achieved impact, and to compare the impact of different green technologies, it is important to evaluate the performance of the green technology projects by recording suitable measuring data of each facility and creating appropriate performance parameters therefrom. Different performance parameters may be needed to cover the different fields of green technologies. For example, to assess the performance of a renewable energy facility, the produced green power may be a suitable performance parameter, and to assess the energy efficiency of a plant or a building, the energy consumption and CO₂ emissions thereof may be an appropriate value. Other technologies, for example those related to sustainable management of resources, may require other performance parameters that are appropriate to evaluate improvement measures to save resources. Currently, such reliable measuring data and performance parameters, which should be accessible to all relevant stakeholders, are not available in green technology projects.

Patent Literature 1: US 2019/057396A1

Patent Literature 1 describes a blockchain-based carbon trading system comprising a carbon emission measurement module, which calculates carbon emission reduction in the fields of energy, industry and transportation after renewable energy and energy-saving measures are adopted. However, said carbon trading system merely provides information on changes in greenhouse gas emissions measured on a given facility at a given point in time. This means that only one parameter affecting the environment is considered and that a special measuring equipment is necessary which can detect said parameter only on a single facility.

An object of the present subject matter is to realize an apparatus, a system, a method and a computer program using standardized evaluation parameters to assess the performance of green technologies included in different facilities and projects and to ensure reliability of said evaluation parameters. This object is solved by the subject matter according to the independent claims. Further preferred developments are described by the dependent claims.

The claimed subject matter may include an apparatus for generating evaluation data of one or more facilities and/or one or more projects. The apparatus may be a single computer or a plurality of computers connected to each other directly or, preferably, via a network such as the internet. Most preferably, the apparatus may be realized as part of a cloud based digital platform.

Evaluation data may be any data suitable to indicate the performance of a facility or a project regarding its impact on the environment and society. For example, an amount of generated wind energy or a reduction in the greenhouse gases emitted by a factory may be included in the evaluation data. The facilities may be any kind of facility like a factory, a power station, a water supply network or a vehicle, wherein the facilities may include at least one green technology such as a thermal insulation on a building, a wind turbine in a power plant or an electric motor in a vehicle. In the following such a facility is referred to as a "green facility". Preferably one green facility may include a plurality of diverse green technologies in order to optimize the positive environmental effect. For example, a public utility may provide renewably power generated, e.g., by a photovoltaic solar power plant and may run electrical cars in its vehicle fleet.

The projects may include at least one green facility and preferably a plurality of green facilities. The green facilities participating in a project may be located at different places and may be combined in such a way that the positive environmental impact can be maximized. In this context, the term "combined" may preferably include the meanings of a technical combination of two or more facilities as well as a combination of two or more facilities in a financial asset. For example, two or more renewable energy facilities, such as a solar power plant and a wind power plant, may be technically connected in a common power grid to benefit from interacting with each other. It may be also possible that different green facilities may be integrated into a green bond as a project. A combination of green bonds in a green bond portfolio may also be a project as well as a combination of green bond portfolios in a further financial asset.

The apparatus may comprise one or more first interfaces configured to automatically receive measuring data from the one or more facilities via a network such as the internet which, in particular, allows reliable transfer of data without the need for, e.g., human interaction. Preferably, the one or more first interfaces may be connected to the one or more facilities via a cloud network providing encrypted data transmission. The one or more first interfaces may receive measuring data in predetermined time intervals. The predetermined time intervals may preferably be in a range between one hour and twenty-four hours, and most preferably in a range between two hours and eight hours. Longer or shorter intervals may however possible as well. The one or more first interfaces may be any kind of interface suitable to automatically receive measuring data from a facility via a network, such as the internet. Preferably, the one or more first interfaces may be REST API interfaces (REST - Representational State Transfer, API - Application Programming Interface). Other types of interfaces may be used as well.

The measuring data may include all measured values recorded in the different facilities connected to the one or more first interfaces as well as all values calculated from said measured values by a processing system of a facility. For example, in case the green facility comprises a wind turbine, the measuring data, e.g., may include the measured wind speed and the measured power output as well as the efficiency of the wind turbine calculated by the processing system of the green facility. Additionally, information about downtimes, maintenance and repair work may be also included in the measuring data. In other words, the measuring data may comprise all operational data of the respective facility.

Furthermore, the processing system of a facility may also be used as an edge server for processing the measuring data near the source of the data. The edge server may carry out pseudonymization of the measuring data before sending them to the one or more first interfaces of the apparatus in order to be consistent with data privacy and security requirements. Depending on the subsequent use of the measuring data, it may also be possible that the edge server may anonymize the measuring data. For example, if the measuring data is used to provide general evaluation data of a certain type of facility without the need to allocate the data to a particular project, the measuring data may be anonymized.

Moreover, the measuring data may comprise further data regarding the environmental conditions of the facility such as weather data including, for example, solar irradiation, cloud coverage and wind speed. Measuring data may not only be received from machinery and equipment supplied with network-compatible sensors but also from other data sources. For example, to evaluate the success of a thermal insulation measure on a building, photos taken before and after applying the measure by a thermal imaging camera can serve as measuring data to quantify the saved energy. Furthermore, the environmental impact of a mining exploration project may be assessed, e.g., by analyzing satellite pictures of the landscape in which the mines shall be placed. In this case the satellite pictures function as measuring data to calculate a resulting impact indicator.

The apparatus may further comprise one or more evaluation units, connected to the one or more first interfaces, which may include one or more data storages that may store the measuring data of the one or more facilities. Alternatively or in addition, the measuring data may be stored in an external data storage which may be connected to the evaluation unit directly or via a network. The evaluation units may be integrated in a single computer or in a plurality of computers.

The evaluation units may further include one or more calculation units that may calculate performance parameters based on the measuring data of the one or more facilities for evaluating the latter. Here, "evaluating" a facility shall be understood as "indicating the performance" of the facility in view of its contribution to green technologies. Performance parameters may be represented by so called key performance indicators (KPI) which allow for assessing and communicating the most relevant properties of a green facility in a concise manner. Depending on the type of green technologies used in a green facility, different KPIs may be needed for evaluation. For example, in case of a production plant having solar panels on the roof of the factory buildings, several KPIs may be of interest. For example, the water consumption and the power consumption of the production may be typical measuring values to be continuously measured and used as basis for KPIs representing sustainable water management and energy efficiency. The KPI representing sustainable water management may be improved, for example, by introducing measures to reduce water consumption into the production line or be applying measures for treating used water. The KPI representing the energy efficiency of the production plant may be improved, for example, by optimizing the production machinery regarding power consumption. This two exemplary KPIs can be used to reflect improvements on an already existing facility starting from a predetermined point in time and indicating the performance of the individual measures carried out on the facility over time. The predetermined point in time, may be, for example, before the first measure to improve the eco-friendliness of the production plant is installed. Furthermore, a KPI can be generated for evaluating the solar panels installed on the roof of the factory buildings. In this case, the power generated by the solar panels can be continuously measured and summarized over a predetermined time interval, such as a week or a month. The summarized value may directly serve as a KPI representing the produced renewable energy.

Furthermore, the evaluation unit may comprise one or more aggregation units that may combine the calculated performance parameters according to a predetermined combination as aggregated project data for evaluating the one or more projects. The aggregation unit may provide KPIs at project level that may offer a broader view on the green facilities included in a project. In case that different green facilities may be integrated into a green bond as a project, the KPIs of the green bond may be generated by combining the KPIs of all green facilities included in the green bond. The predetermined combination may be carried out depending on the type of green facilities included in the green bond. For example, in case the green bond comprises only facilities producing renewable energy, wherein said produced renewable energy directly serves as KPI, the KPIs of the different facilities need only be summed up. Alternatively or in addition, in a case where the green bond includes facilities producing renewable energy and facilities improving their energy efficiency, the different KPIs, namely the produced renewable energy and the saved energy may be individually rated by a factor and then summed up to a common KPI. Besides combining KPIs of green facilities calculated by the calculation unit, the aggregation unit may generate new/additional KPIs at project level based on the raw measuring data of the green facilities included in a respective project. It may be also possible that the KPIs at project level are transformed into a less complex information. For example, in same cases the exact value of produced renewable energy might not be important but only if a certain threshold has been exceeded. In such a case, the KPI calculated at the project level may only contain a "YES" or "NO". Furthermore, the aggregated project data may comprise administrative data related to the project such as details about the project owner or the like.

The above described KPIs allow for efficiently assessing the performance of individual green facilities as well as projects consisting of different green facilities. Receiving the measuring data automatically on a regular basis improves the credibility of the calculated/aggregated evaluation data. The calculation and aggregation structure implemented in the evaluation unit allows to provide a complete overview of a project as well as a detailed view of the individual green facilities to understand the progress of the project KPIs.

Further, the one or more evaluation units may calculate the performance parameters and may aggregate the project data on distributed computer resources. The use of distributed computer resources causes a plurality of redundant evaluation data which further improves the reliability/credibility of the results. In addition, the efficiency of the calculations is improved and distributed computing resources can be scaled more easily compared to a single mainframe, so that new features can easily be added to an existing project. Hence, evaluation parameters, such as KPIs, are automatically determined and used to assess the performance of green technologies included in different facilities and projects and the reliability of the determined evaluation parameters is ensured.

According to an aspect, the one or more evaluation units may encrypt the measuring data, the performance parameters and the aggregated project data. This allows for secure data exchange between distributed computer resources, e.g., in a cloud network.

Furthermore, the apparatus may store the measuring data, calculation instructions of the performance parameters and processing instructions of the aggregated project data as well as the calculated performance parameters and the aggregated project data in a blockchain. The calculation instructions may include equations as well as coefficients to calculate the performance parameters. A blockchain may be a transaction log that records all calculations of the performance parameters and/or the aggregated project data performed by the evaluation unit. Transactions may be collected inside blocks that may be appended to the blockchain and connected to each other via a hash value. The blockchain enables the calculation of the evaluation data on distributed resources in a network (blockchain network) and additionally includes an internal encrypting system by hashes and public-key cryptography which further improves the credibility of the generated evaluation data. Furthermore, the blockchain network enables a direct peer-to-peer communication between the distributed computer resources without the need for a central main server.

According to an aspect, the apparatus realized in a blockchain network may further comprise a plurality of peers each including the one or more evaluation units. A peer may be an equal network user in a blockchain network, such as a computer or a mobile device, which communicate directly with each other via a peer-to-peer communication. The one or more evaluation units of each peer may execute a smart contract (or simply contract) including the calculation instructions of the performance parameters and the processing instructions of the aggregated project data.

Additionally, the apparatus may comprise an ownership controller which may define a participation of each peer to one or more channels according to their participation to one or more projects, and to define peers for executing the smart contract. A channel may be a private subnet between two or more peers for the purpose of confidential communication within a project.

The ownership controller may further choose a first group of peers for performing a smart contract execution when new measuring data is received by the first interface, wherein the measuring data is allocated to one or more channels. The allocation of the measuring data to the one or more channels may be realized by identifiers included in the head of the measuring data set. The first group of peers may be chosen by the ownership controller according to information about the calculation instructions and/or the processing instructions included in the smart contract of each peer. In other words, the ownership controller may choose the peers of the first group considering their capability to calculate the required KPIs. The capability may be considered with regard to computing performance and/or the presence of the respective instructions in the smart contracts. For example, if the measuring data includes efficiency values of a facility, all peers which are able to calculate a CO₂ equivalent based on efficiency values may be selected for calculation.

The ownership controller may further choose all peers associated with the channel to which the measuring data is allocated to as a second group of peers, wherein the first group of peers is larger than the second group of peers and the second group of pears is included in the first group of peers. In other words, the number of peers executing the smart contract is higher than the number of peers participating in the one or more channels to which the measuring data is allocated. This allows for improving the credibility of the calculated results because of the higher redundancy thereof compared to the usual case where only the peers belonging to the same channel execute the smart contract.

Moreover, peers which are included in the first group but not in the second group of peers may delete results of the smart contract execution when a data confirmation in the blockchain is completed, and peers which are included in the first and the second group of peers may store the results of the smart contract execution in the database when the data confirmation in the blockchain is completed. The data confirmation may comprise that a predetermined number of peers having executed a contract has to endorse the results obtained from execution for the calculation to be designated as valid. Preferably, the predetermined number of peers confirming/endorsing the calculation may be 30 % to 100% of the peers executing the calculation, and most preferably, the predetermined number of peers confirming/endorsing the calculation may be 40 % to 70% of the peers executing the calculation.

This means that after the results are confirmed/endorsed by the responsible peers only the peers participating in the one or more channels to which the measuring data is allocated are allowed to store the results, whereas all other peers have to delete it after data the confirmation/endorsement. Consequently, the privacy of the channels is ensured by increasing the credibility of the results at the same time.

According to an aspect, the apparatus may store data of a last block of the blockchain in an off-chain database. The data of a last block of the block of the blockchain may be the latest results of the calculation of performance parameters and/or aggregation of the project data statistics. The off-chain database may be part of a distributed ledger maintained on every peer included in the blockchain network. Besides the off-chain database the ledger may include the blockchain itself. Storing the latest data in an off-chain database allows for a fast and efficient access to current data.

The apparatus may further comprise one or more second interfaces, connected to the one or more evaluation units, which may receive a request from one or more user interfaces for generating a report based on a set of evaluation data. The set of evaluation data may include the performance parameters and/or the aggregated project data, depending on the requirements defined in the received request. The report may comprise a customized set of evaluation data adapted to the specific requirements of each user.

Further, the one or more second interfaces may output the requested report to one or more user interfaces via the network. The one or more second interfaces may be any kind of interface suitable to send and receive data via a network, such as the internet. Preferably, the one or more second interfaces may be REST API interfaces (REST - Representational State Transfer, API - Application Programming Interface). Other types of interfaces may be used as well. Preferably, the one or more second interfaces may be connected to the one or more user interfaces via a cloud network providing encrypted data transmission.

According to an aspect, the subject matter may include a system for generating evaluation data of one or more facilities and/or one or more projects which may preferably be realized as a cloud based digital platform.

The system may comprise the apparatus as described above as well as one or more facilities connected to said apparatus via a network and configured to automatically send measuring data to the apparatus in predetermined time intervals. The facilities may be any kind of facility like a factory, a power station, a water supply network or a vehicle, wherein the facilities, referred to as green facilities, may include at least one green technology such as a thermal insulation on a building, a wind turbine in a power plant or an electric motor in a vehicle. The predetermined time intervals may preferably be in a range between one hour and twenty-four hours, and most preferably in a range between two hours and eight hours.

Moreover, the system may comprise one or more user interfaces connected to said apparatus via the network and configured to request and receive automatically generated reports based on a set of evaluation data including performance parameters and/or aggregated project data. The one or more user interfaces may preferably be web portal servers connected to the one or more second interfaces of the apparatus via a network, such as the internet. Preferably, the one or more user interfaces may be connected to the apparatus via a cloud network providing encrypted data transmission. The user interface allows for retrieving customized reports on the project including exactly the information needed by the user. Furthermore, the desired information is available via a cloud network using encrypted data transmission which provides a high flexibility as well as a high security regarding the accessibility of the data.

Alternatively or in addition, the user interface may be connected to a second blockchain database, acting as "marketplace" for investors, project owners, issuers or the like, that demonstrates ownership according to financial transactions. This means that relevant information regarding transactions performed on this second blockchain database may be sent via the user interface to the ownership controller of the first blockchain (for generating the evaluation data) which may update the channel configuration thereof according to the performed transactions in the second blockchain.

For example, in case a new green project is submitted in the second blockchain database, the information may be sent to the ownership controller of the first blockchain, which may create a peer and a channel for this new green project. Then an issuer may include said green project into a new green bond which may trigger the ownership controller to update the channel configuration of the created channel in the first blockchain by adding a link between the green project and the issuer. Additionally, an external reviewer (or a service provider) may be allocated to the green bond. In this case, the ownership controller may update the channel configuration by creating a link between the green project and the external reviewer (or service provider). Furthermore, after issuance, a plurality of investors may buy the green bond. Then, the ownership controller of the first blockchain my update the channel configuration by creating a plurality of additional links to the investors. During the lifetime of the green bond, the investors may trade their part in the secondary market. Hence, the ownership controller may create and remove channels inside the first blockchain accordingly. In summary, multiple contracts and transactions performed in the second blockchain may have an effect in the channel configuration of the first blockchain providing the evaluation data of the related green projects.

Furthermore, the one or more facilities of the system may include one or more edge servers which may pseudonymize and/or anonymize the measuring data. For example, the processing system of a facility may also be used as an edge server for processing the measuring data near the source of the data. The one or more edge server may carry out pseudonymization of the measuring data before sending them to the one or more first interfaces of the apparatus in order to be consistent with data privacy and security requirements. Depending on the subsequent use of the measuring data, it may also be possible that the one or more edge servers may anonymize the measuring data. This means that, in order to be compliant with jurisdictions about data transmission and storage, the one or more edge servers can filter or pre-process the measuring data to achieve a certain degree of pseudonymization and/or anonymization using edge computing before sending the measuring data to the evaluation unit.

Preferably, it may be possible to send measuring data from the facilities to the one or more first interfaces of the apparatus and vice versa. Most preferably, it may only be possible to send data from the facilities to the one or more first interfaces of the apparatus.

Alternatively or in addition, to fulfill local data protection regulations, only peers located within the acceptable jurisdiction, regulation, or the like may be allowed to perform the calculation of the respective evaluation data.

As a further alternative to comply with data protection regulations, the aggregated project data may be split among various sub-channels separating the different information such as information about the hardware, operational data, project characteristics, owners, contracts, and the like.

According to an aspect, the subject matter may include a method for generating evaluation data of one or more facilities and/or one or more projects comprising the following steps:
- automatically receiving measuring data from the one or more facilities via a network by one or more first interfaces;
- storing the measuring data of the one or more facilities by one or more data storages included in one or more evaluation units;
- calculating performance parameters based on the measuring data of the one or more facilities by one or more calculation units included in the one or more evaluation units for evaluating the one or more facilities; and/or
- combining the calculated performance parameters according to a predetermined combination as aggregated project data by one or more aggregation units included in the one or more evaluation units for evaluating the one or more projects.

In this context, the calculation of the performance parameters and the aggregation of the project data may be performed by the one or more evaluation units on distributed computer resources.

Further, the measuring data, the performance parameters and the aggregated project data may be encrypted by the one or more evaluation units.

According to an aspect, the measuring data, a calculation instruction of the performance parameters and a processing instruction of the aggregated project data as well as the performance parameters and the aggregated project data may be stored in a blockchain.

The method may further comprise the steps of
- executing a smart contract including the calculation instructions of the performance parameters and the processing instructions of the aggregated project data by one or more evaluation units, each included in a peer;
- defining the participation of each peer to one or more channels according to their participation to one or more projects, and defining peers for executing the smart contract by an ownership controller;
- choosing a first group of peers by the ownership controller for performing a smart contract execution when new measuring data is received by the first interface, wherein the measuring data is allocated to one or more channels, and wherein the first group of peers is chosen according to information about the calculation instructions and/or the processing instructions included in the smart contract of each peer;
- choosing the peers belonging to the one or more channels the measuring data is allocated to as a second group of peers by the ownership controller, wherein the first group of peers is larger than the second group of peers and the second group of pears is included in the first group of peers.

Furthermore, when a data confirmation in the blockchain is completed, results of the smart contract execution may be deleted by peers which are included in the first group but not in the second group of peers, and the results of the smart contract execution may be stored in the database by peers which are included in the first and the second group of peers.

Additionally, the method may include that data of a last block of the block chain data and statistics about projects are stored in an off-chain database. This allows for a fast and efficient access to currently required data and statistics about projects.

According to an aspect, the method may further comprise the steps:
- receiving a request for automatically generating a report based on a set of evaluation data including the performance parameters and the aggregated project data by one or more second interfaces, connected to the one or more evaluation units; and
- outputting the requested report from the one or more second interfaces (8) to one or more user interfaces via the network.

Further, the claimed subject matter may include a computer program product storable in a memory comprising instructions which, when carried out by a computer, cause the computer to perform the method described above. "Include" may mean that the control unit is physically integrated with the engine or that it is remotely arranged, however, connected thereto by signal lines and the like.

Summarizing, the claimed subject matter allows for indicating the performance of green facilities and projects in order to improve their contribution to an eco-friendly environment by calculating and aggregating performance parameters based on measuring data of said green facilities. The subject matter improves the credibility of the generated evaluation data by automatically receiving the measuring data from the green facilities and performing the calculation and aggregation of the performance parameters on distributed resources using, for example, a cloud-based network and blockchain technology.

In the following the subject matter will be further explained based on one or more preferential example of the claimed subject matter with reference to the attached exemplary drawings, wherein:
- Figure 1: shows an example of a system for generating evaluation data including different facilities, an apparatus for generating the evaluation data and a user interface;
- Figure 2: shows an example in which the apparatus for generating evaluation data is realized in a blockchain network;
- Figures 3 and 4: show an example for a transaction stored in the blockchain;
- Figure 5: shows a further example of a blockchain network, depicting data generated by transactions of the blockchain and stored in an offchain database; and
- Figure 6: shows schematically a function of the ownership controller included in the blockchain.

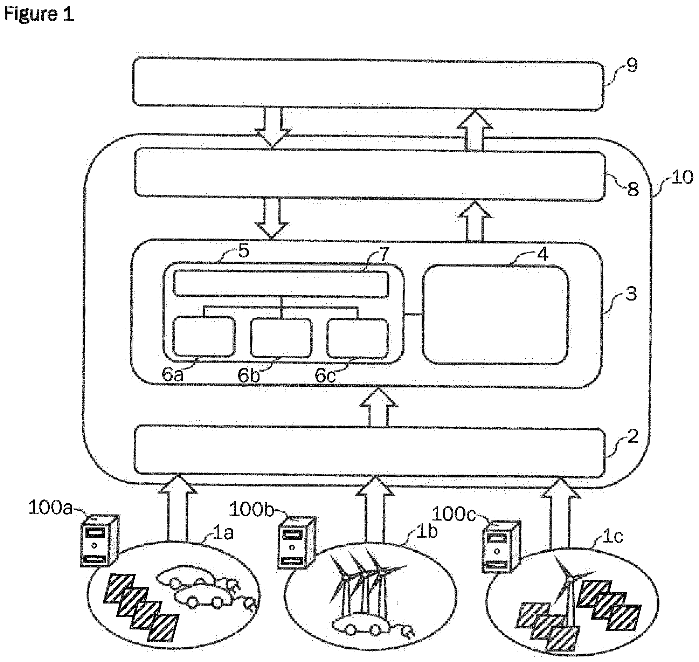

In Figure 1 a system for generating evaluation data of different green facilities and projects is schematically illustrated. The green facilities 1a, 1b, 1c, which operate/include different green technologies like electric vehicles, wind turbines and solar panels, send measuring data to the first interface 2 of the apparatus 10 in predetermined time intervals. However, alternatively or additionally, they may send them based on request. The predetermined time intervals may be, for example, every hour, every two to eight hours or every day or longer.

The green facilities 1a, 1b, 1c may comprise one or more edge servers 100 a, 100b, 100c for pseudonymizing and/or anonymizing the measuring data in order to comply with data security regulations.

The first interface 2 may be an interface using known architecture which is suitable to send and receive data via the internet, such as a REST API interface or the like. The data communication between the green facilities 1a, 1b, 1c and the first interface 2 may be realized using a cloud network providing encrypted data transmission. The green facilities 1a, 1b, 1c are not limited to the depicted green technologies but can be every green technology which is able to cause a positive impact on the environment.

After receiving the measuring data, the first interface 2 forwards the data to the evaluation unit 3, in which it is stored in the data storage 4. Furthermore, the measuring data is passed to the calculator 5 which includes the calculation units 6a, 6b, 6c and the aggregation unit 7. The calculation units 6a, 6b, 6c process the measuring data to calculate the performance parameters (key performance indicator - KPI) of the respective green facilities according to calculation instructions. In case of the depicted facilities 1a, 1b, 1c the KPIs may be the generated green energy of the wind turbines and the solar panels and the percentage of CO₂ reduction by the use of electric vehicles instead of vehicles with internal combustion engines. Having calculated the KPIs of the individual green facilities, the calculation units 6a, 6b, 6c store the calculated results in the data storage 4 and pass them to the aggregation unit 7. The aggregation unit 7 has further access to the raw measuring data stored in the data storage 4. The aggregation unit 7 may combine the KPIs of the green facilities included in a respective project calculated by the calculation units 6a, 6b, 6c according to processing instructions and/or may determine new/additional project KPIs based on the raw measuring data of the green facilities included in a respective project. A project may include at least one green facility and may preferably comprise a plurality of green facilities. For example, a plurality of different green facilities may be integrated into a green bond as a project. A combination of green bonds in a green bond portfolio may also be a project as well as a combination of green bond portfolios in a further financial asset.

Having determined the KPIs at the project level, the aggregation unit 7 stores the results in the data storage 4 from which they can be invoked via the second interface 8. The second interface 8 may be an interface using known architecture which is suitable to send and receive data via the internet, such as a REST API interface or the like. The second interface 8 can be reached from a user interface 9 which, e.g., may be a web portal server. Instead of determining the KPIs at project level on a regular basis, it may be also possible to determine said KPIs only when a request for determining KPIs of a special project is received by the second interface 8. This allows for saving storage volume and for providing customized reports to a user. The data communication between the second interface 8 and the user interface 9 may be realized using a cloud network providing encrypted data transmission.

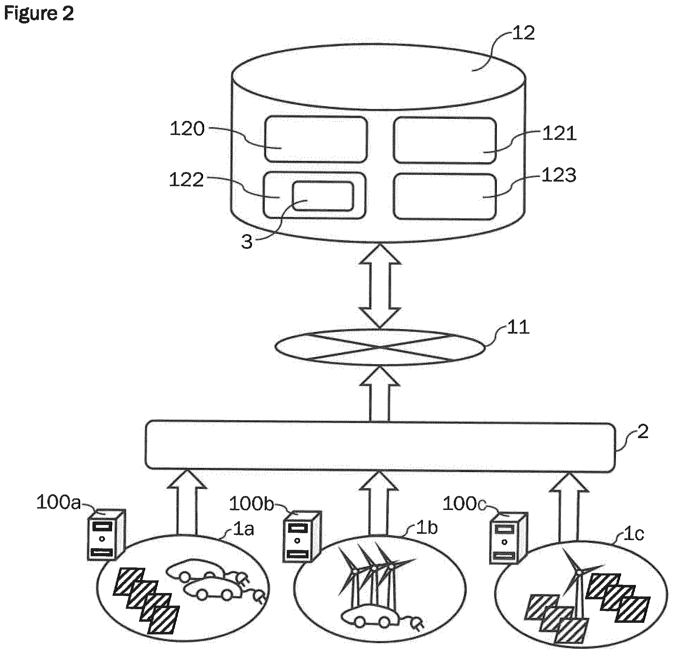

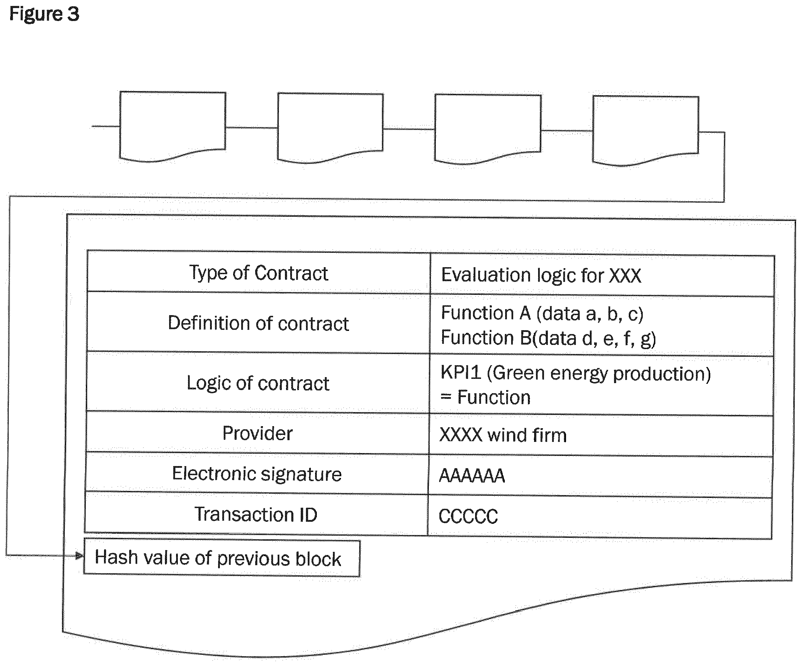

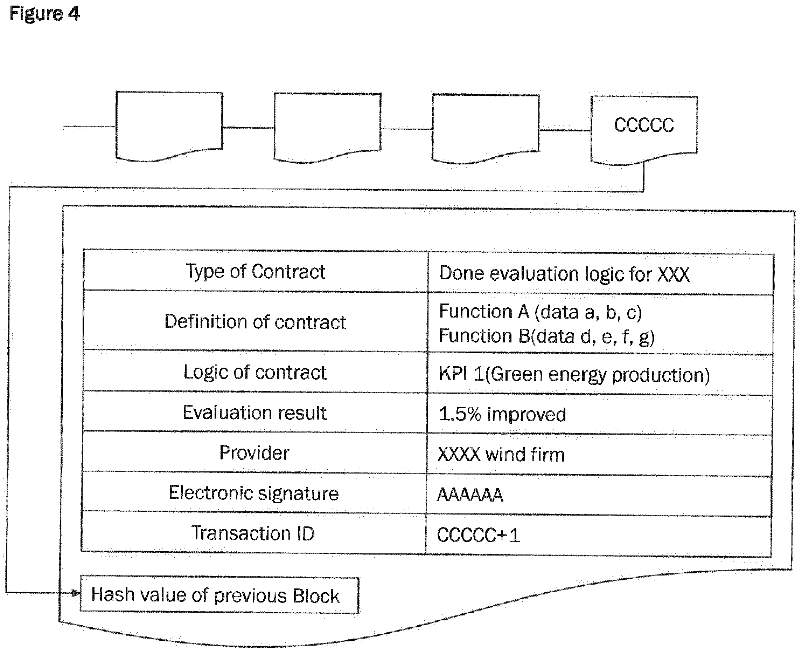

Fig. 2 presents an example in which the apparatus 10 is realized in a blockchain, wherein the blockchain is represented by a single peer 12 representative for all peers included therein. A blockchain is a network which enables a direct peer-to-peer communication between equal network users (peers) contrary to a server-client system. The evaluation unit 3 as described in connection with Fig. 1 is included in the smart contract 122 executed by each peer 12. An example of a transaction including a smart contract (or simply contract) is given in the Figs. 3 and 4 described hereinafter. Further characteristics of a blockchain are a transaction management 120, a consensus management 121 and a distributed ledger 123. The transaction management 120 defines the rules as to how to conduct a smart contract 122. A transaction to be carried out between two peers 12 is enabled when all responsible parties agree to the conditions defined in advance. For example, when measuring data is send to a peer 12 by a facility 1a, 1b, 1c, the smart contract 122 including the calculation instructions of the performance parameters and/or the processing instructions of the aggregated project data is carried out by the peer 12 receiving the measuring data. Then said peer 12 sends the results of the calculation to all other peers 12 which endorse the calculation. The consensus management 121 defines which peers 12 verify the correctness of a set of transactions comprising a block of a blockchain. Consensus is achieved when the order and the results of a block's transactions are approved to be correct by the peers 12 in charge. Only then the block is stored in the distributed ledger 123 comprising the blockchain which is maintained on every peer 12 included in the blockchain network.

As mentioned above, the Figs. 3 and 4 show an example for a transaction stored in a block of the blockchain. The depicted transaction includes a contract for determining KPI1 which represents an increase in the production of green energy. The contract comprises the type of contract, the definition of the functions and the logic to be carried out to determine KPI1, the calculation result, the energy provider, an electronic signature and a transaction ID. The calculation instructions of the performance parameters and/or the processing instructions of the aggregated project data are comprised in the definition of the functions and carried out by the contract logic. The electronic signature encrypts the data included in a transaction and the transaction ID identifies each transaction stored in the blockchain. The individual blocks of the blockchain are connected by a hash value of the respective preceding block. Fig. 3 shows the exemplary transaction when it is deployed to the blockchain and Fig. 4 shows a result of the calculation carried out by the transaction.

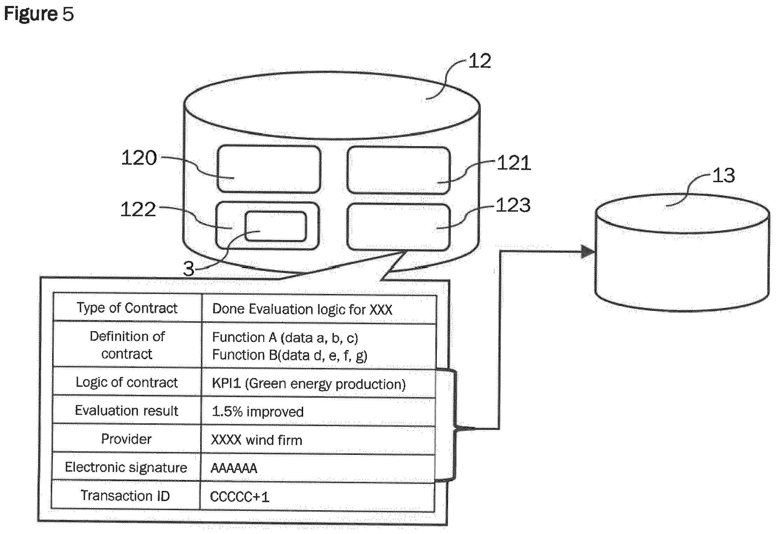

Fig. 5 shows a variation of the blockchain depicted in Fig. 2, wherein a part of the data generated by transactions in the blockchain, namely the contract logic, the evaluation result, the provider and the electronic signature, is stored in an off-chain database 13. These values are extracted from a block of the blockchain, preferably the last, in order to provide efficient access to current data and statistics about projects. This off-chain database is part of the distributed ledger 123 maintained on every peer 12 included in the blockchain network.

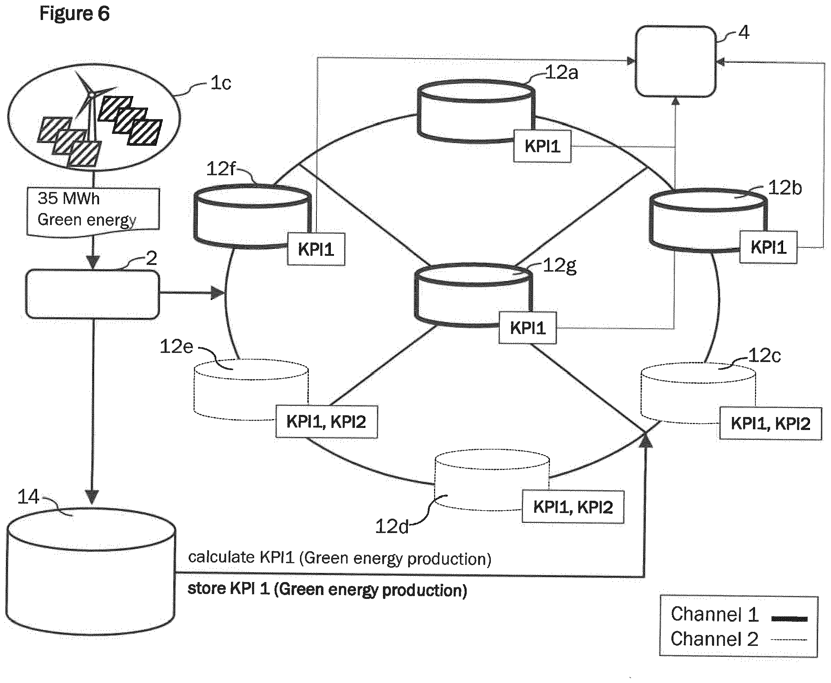

In Fig. 6 the role of the ownership controller 14 of the blockchain network is exemplary described. The ownership controller 14 defines the channels of the blockchain network, the peers 12a to 12g executing a contract and the peers 12a to 12g endorsing a transaction. A channel may be a private subnet of communication between two or more peers 12a to 12g for the purpose of conducting private and confidential contracts. The peers 12a, 12b, 12f, 12g depicted in bold lines belong to channel 1, whereas the other peers 12c, 12d, 12e, depicted in dotted lines, belong to channel 2. There is one ledger per channel and each channel is assigned to a project. It may be possible for a single peer 12a to 12g to belong to more than one channel when data of more than one project is transferred to that peer 12a to 12g. Each peer 12a to 12g maintains a copy of the ledger for each channel of which they are a member. Furthermore, peers 12a to 12g of different channels may comprise the same calculation instructions and/or the processing instructions for determining the same type of KPIs but for different projects. In the depicted example KPI1 represents the green energy production of the facility 1c, and KPI2 a further arbitrary KPI.

New measuring data is received by the first interface 2 which includes, e.g., an amount of green energy produced by the facility 1c in the last 24 hours (e.g. 35MWh). The facility 1a belongs, e.g., to the project which is organized in channel 1. It is clear from the type of received measuring data that KPI 1 representing the produced green energy has to be calculated. Therefore, the ownership controller 4 selects all peers 12a to 12g which are able to calculate KPI1 without considering their channel participation and triggers them to execute the contract. This allows for improving the reliability of the resulting evaluation data, since the number of peers 12a to 12g able to calculate KPI 1 is higher than the number of peers 12a, 12b, 12f, 12g merged in channel 1. In a further step, when the results are confirmed/endorsed by the responsible channels (not depicted), the ownership controller 4 triggers the peers 12a, 12b, 12f, 12g belonging to channel 1 to store the calculated results in the data storage 4, whereas all other peers 12c, 12d, 12e are instructed by the ownership controller 4 to delete the calculated results, in order to guarantee the privacy of channel 1. When the peers in charge for the consensus management (not depicted) have verified the correctness of a set of transactions stored in the data storage 4, a new block may be appended to the blockchain and the off-chain database 13 may be updated.

Each peer 12a to 12g of the blockchain network is connected to a second interface 8 according to Fig. 1, which can be reached from a user interface 9 which, e.g., may be a web portal server. Users participating channel 1 may send a request for a report including the determined KPI1 and further KPIs of further facilities 1a, 1b, 1c included in the project. The report may also include KPIs at the project level combining and summarizing the KPIs of the different facilities. It may be also possible that the KPIs are calculated only when a request for determining KPIs of a special project is received by the second interface 8. This allows for saving storage volume and for providing customized reports to a user. The data communication between the second interface 8 and the user interface 9 may be realized using a cloud network providing encrypted data transmission.

The claimed system may be realized as a platform and the maintenance and the further development of the platform, such as implementation of additional functions, may be provided by a platform owner. Further, the projects may be defined by other users than the users investing in a project or running a facility. Each user may have different access rights to the platform. Depending thereon each user may be allowed or restricted to access a channel which may be, e.g., determined based on user access data stored in the platform. For example, the user owning a part of a green project, may have access to the channel providing aggregated project information, while the user defining/starting a new project may be allowed to access channels which provide the evaluation parameters itself for different facilities. The configuration of the smart contracts and the handling of the blockchain(s) may further be restricted to be accessed by the platform owner only or by specifically specified hosting users/administrators. Hence, the described apparatus, system, method and computer program, in addition to the above, also enables more efficient handling of green bonds via a distributed, safe computer platform.

Summarizing, the claimed subject matter inter alia enables the generation of reliable evaluation data suitable to indicate the performance of a plurality of green facilities and projects. This is realized by automatically receiving measuring data from the green facilities and performing the calculation and aggregation of key performance indicators (KPI) on distributed resources using, for example, a cloud-based network and blockchain technology.

### Reference sign list

- 1a, 1b, 1c: facility
- 2: first interface
- 3: evaluation unit
- 4: data storage
- 5: calculator
- 6a, 6b, 6c: calculation unit
- 7: aggregation unit
- 8: second interface
- 9: user interface
- 10: apparatus
- 11: network
- 12, 12a to 12g: peer
- 100a, 100b, 100c: edge server
- 120: consensus management
- 121: transaction management
- 122: smart contract
- 123: distributed ledger
- 13: off-chain database
- 14: ownership controller

## Claims

1. Apparatus (10) for generating evaluation data of one or more facilities (1a, 1b, 1c) and/or one or more projects comprising:
one or more first interfaces (2) configured to automatically receive measuring data from the one or more facilities (1a, 1b, 1c) via a network (11); and
one or more evaluation units (3), connected to the one or more first interfaces (2), including:
one or more data storages (4) configured to store the measuring data of the one or more facilities (1a, 1b, 1c),
one or more calculation units (6a, 6b, 6c) configured to calculate performance parameters based on the measuring data of the one or more facilities (1a, 1b, 1c) for evaluating the one or more facilities, and
one or more aggregation units (7) configured to combine the calculated performance parameters according to a predetermined combination as aggregated project data for evaluating the one or more projects, wherein
the one or more evaluation units (3) are configured to calculate the performance parameters and to aggregate the project data on distributed computer resources.

2. The apparatus (10) according to claim 1, wherein the one or more evaluation units (3) are configured to encrypt the measuring data, the performance parameters and the aggregated project data.

3. The apparatus (10) according to claim 1 or 2, configured to store the measuring data, calculation instructions of the performance parameters and processing instructions of the aggregated project data as well as the calculated performance parameters and the aggregated project data in a blockchain.

4. The apparatus (10) according to claim 3, further comprising
a plurality of peers (12, 12a to 12g) each including the one or more evaluation units (3), wherein the one or more evaluation units are configured to execute a smart contract including the calculation instructions of the performance parameters and the processing instructions of the aggregated project data; and
an ownership controller (14) configured to define a participation of each peer to one or more channels according to their participation to one or more projects, and to define peers for executing the smart contract.

5. The apparatus (10) according to claim 3 or 4, wherein the ownership controller (14) is configured to choose a first group of peers (12, 12a to 12g) for performing a smart contract execution when new measuring data is received by the first interface (2), wherein the measuring data is allocated to one or more channels.

6. The apparatus (10) according to at least one of the preceding claims 4 to 5, wherein the ownership controller (14) is configured to choose the first group of peers (12, 12a to 12g) according to information about the calculation instructions and/or the processing instructions included in the smart contract of each peer (12, 12a to 12g).

7. The apparatus (10) according to at least one of the preceding claims 4 to 6, wherein the ownership controller is configured to choose all peers (12, 12a to 12g) participating in the one or more channels to which the measuring data is allocated to as a second group of peers (12, 12a to 12g), wherein the first group of peers (12, 12a to 12g) is larger than the second group of peers (12, 12a to 12g) and the second group of pears (12, 12a to 12g) is included in the first group of peers (12, 12a to 12g).

8. The apparatus (10) according to at least one of the preceding claims 4 to 7, wherein peers (12, 12a to 12g) which are included in the first group but not in the second group of peers (12, 12a to 12g) are configured to delete results of the smart contract execution when a data confirmation in the blockchain is completed, and
peers (12, 12a to 12g) which are included in the first and the second group of peers (12, 12a to 12g) are configured to store the results of the smart contract execution in the database (4) when the data confirmation in the blockchain is completed.

9. The apparatus (10) according to at least one of the preceding claims 4 to 8, configured to store data of a last block of the blockchain or statistics about projects in an off-chain database (14).

10. The apparatus (10) according to at least one of the preceding claims 1 to 9, further comprising:
one or more second interfaces (8), connected to the one or more evaluation units (3), configured to receive a request from one or more user interfaces (9) for generating a report based on a set of evaluation data including the performance parameters and/or the aggregated project data, and
to output the requested report from the one or more second interfaces (8) to the one or more user interfaces (9) via the network (11).

11. A system for generating evaluation data of one or more facilities (1a, 1b, 1c) and/or one or more projects comprising:
the apparatus (10) according to at least one of the preceding claims 1 to 10;
one or more facilities (1a, 1b, 1c) connected to said apparatus (10) via a network (11) and configured to automatically send measuring data to the apparatus (10) in predetermined time intervals; and
one or more user interfaces (9) connected to said apparatus (10) via the network (11) and configured to request and receive automatically generated reports based on a set of evaluation data including performance parameters and/or aggregated project data.

12. The system according to claim 11, wherein the one or more facilities include one or more edge servers (100a, 100b, 100c) configured to pseudonymize and/or anonymize the measuring data.

13. A method for generating evaluation data of one or more facilities (1a, 1b, 1c) and/or one or more projects comprising the steps:
automatically receiving measuring data from the one or more facilities (1a, 1b, 1c) via a network (11) by one or more first interfaces (2);
storing the measuring data of the one or more facilities (1a, 1b, 1c) by one or more data storages (4) included in one or more evaluation units (3);
calculating performance parameters based on the measuring data of the one or more facilities (1a, 1b, 1c) for evaluating the one or more facilities; and
combining the calculated performance parameters according to a predetermined combination as aggregated project data for evaluating the one or more projects, wherein
the calculation of the performance parameters and the aggregation of the project data is performed by the one or more evaluation units (3) on distributed computer resources.

14. The method according to claim 13, wherein the measuring data, the performance parameters and the aggregated project data are encrypted by the one or more evaluation units (3).

15. The method according to claim 13 or 14, wherein the measuring data, a calculation instruction of the performance parameters and a processing instruction of the aggregated project data as well as the performance parameters and the aggregated project data are stored in a blockchain.

16. The method according to claim 15, further comprising the steps
executing a smart contract including the calculation instructions of the performance parameters and the processing instructions of the aggregated project data by one or more evaluation units, each included in a peer (12, 12a to 12g); and
defining the participation of each peer to one or more channels according to their participation to one or more projects, and defining peers for executing the smart contract by an ownership controller (14).

17. The method according to claim 15 or 16, further comprising the steps
choosing a first group of peers (12, 12a to 12g) by the ownership controller (14) for performing a smart contract execution when new measuring data is received by the first interface (2), wherein the measuring data is allocated to one or more channels, and wherein the first group of peers (12, 12a to 12g) is chosen according to information about the calculation instructions and/or the processing instructions included in the smart contract of each peer (12, 12a to 12g); and
choosing the peers (12, 12a to 12g) belonging to the one or more channels the measuring data is allocated to as a second group of peers (12, 12a to 12g) by the ownership controller (14), wherein the first group of peers (12, 12a to 12g) is larger than the second group of peers (12, 12a to 12g) and the second group of pears (12, 12a to 12g) is included in the first group of peers (12, 12a to 12g).

18. The method according to at least one of the claims 15 to 17, wherein,
when a data confirmation in the blockchain is completed,
results of the smart contract execution are deleted by peers (12, 12a to 12g) which are included in the first group but not in the second group of peers (12, 12a to 12g); and the results of the smart contract execution are stored in the database (4) by peers (12, 12a to 12g) which are included in the first and the second group of peers (12, 12a to 12g).

19. The method according to at least one of the preceding claims 15 to 18, wherein data of a last block of the block chain or statistics about projects are stored in an off-chain database (14).

20. The method according to at least one of the preceding claims 13 to 19, further comprising the steps:
receiving a request from one or more user interfaces (9) for generating a report based on a set of evaluation data including the performance parameters and the aggregated project data by one or more second interfaces (8), connected to the one or more evaluation units (3); and
outputting the requested report from the one or more second interfaces (8) to the one or more user interfaces (9) via the network (11).

21. A computer program product storable in a memory comprising instructions which, when carried out by a computer, cause the computer to perform the method according to the preceding claims 13 to 20.
